# EUROPÄISCHE PATENTSCHRIFT

(11) **EP 2 787 833 B1**
(45) Veröffentlichungstag und Bekanntmachung des Hinweises auf die Patenterteilung: **06.11.2019**
(21) Anmeldenummer: 12794992.3
(22) Anmeldetag: 05.12.2012
(51) Int. Cl.: A23G 3/48, A23G 3/44, A23G 3/52, A23G 3/38, A23G 3/42

(54) **ZUCKERSÜßWARE AUF BASIS EINES GELATINEGELS UND VERFAHREN ZUR HERSTELLUNG**
SUGAR CONFECTIONARY PRODUCT ON THE BASIS OF A GELATIN GEL AND METHOD FOR ITS PRODUCTION
SUCRERIE À BASE D'UN GEL DE GÉLATINE ET SON PROCÉDÉ DE PRODUCTION

(30) Priorität: 05.12.2011 DE 102011056018
(43) Veröffentlichungstag der Anmeldung: 15.10.2014
(73) Patentinhaber: GELITA AG, 69412 Eberbach (DE)
(72) Erfinder: DICK, Eberhard, 69151 Neckargemünd (DE); WALTER, Simone, 69483 Wald-Michelbach (DE)
(74) Vertreter: Hoeger, Stellrecht & Partner Patentanwälte mbB
(86) Internationale Anmeldenummer: PCT/EP2012/074436
(87) Internationale Veröffentlichungsnummer: WO 2013/083601

(56) Entgegenhaltungen:
- EP-A2- 1 269 856
- WO-A1-2012/006215
- US-A- 5 932 273
- US-A1- 2002 064 584
- THORSTEN MAIER ET AL: "Process and storage stability of anthocyanins and non-anthocyanin phenolics in pectin and gelatin gels enriched with grape pomace extracts", EUROPEAN FOOD RESEARCH AND TECHNOLOGY ; ZEITSCHRIFT FÜR LEBENSMITTELUNTERSUCHUNG UND -FORSCHUNG A, SPRINGER, BERLIN, DE, Bd. 229, Nr. 6, 30. August 2009 (2009-08-30), Seiten 949-960, XP019756746, ISSN: 1438-2385, DOI: 10.1007/S00217-009-1134-9

## Beschreibung

Die vorliegende Erfindung betrifft eine Zuckersüßware auf Basis eines Gelatinegels, umfassend ca. 1 bis ca. 15 Gew.%, bevorzugt ca. 1 bis ca. 7,5 Gew.% Gelatine und ca. 20 bis ca. 85 Gew.% mindestens eines Zuckers und/oder Zuckeraustauschstoffs.

Die Erfindung betrifft ferner ein Verfahren zur Herstellung einer derartigen Zuckersüßware.

Zuckersüßwaren, die auf Basis eines Gelatinegels hergestellt sind, umfassen z.B. Gummibonbons (besonders bekannt in Form von Gummibärchen) und Marshmallows (bei denen das Gelatinegel mit Luft aufgeschäumt ist). Zur Herstellung derartiger Süßwaren wird Gelatine, d.h. partiell hydrolysiertes Kollagen aus tierischem Bindegewebe, bei einer erhöhten Temperatur von z.B. 60 °C gelöst, wobei eine homogene kolloidale Lösung erhalten wird, die beim Abkühlen zu einem relativ festen Gelatinegel erstarrt. Dieser Vorgang ist reversibel, d.h. derartige Zuckersüßwaren schmelzen oberhalb einer bestimmten Temperatur, die typischerweise im Bereich von 40 bis 45 °C liegt.

Dieser relativ niedrige Schmelzpunkt stellt bei der Lieferung von Zuckersüßwaren in Regionen, in denen ganzjährig oder saisonal entsprechend hohe Temperaturen herrschen, ein erhebliches Problem dar, da die Produkte beim Anschmelzen miteinander und/oder mit der Verpackung verkleben bzw. ihre vorgegebene Form verlieren und damit unverkäuflich sind. Unter solchen Bedingungen müssen diese Zuckersüßwaren daher gekühlt werden, was insbesondere beim Transport mit erheblichen Zusatzkosten verbunden ist. Dies kann dazu führen, dass die Lieferung von Zuckersüßwaren auf Gelatinebasis in heiße Regionen völlig unrentabel wird.

Es sind auch alternative Zuckersüßwaren mit höheren Schmelzpunkten bekannt, die anstelle von Gelatine auf der Basis von pflanzlichen Hydrokolloiden wie Pektin, Agar, Gellan oder Stärke hergestellt sind. Diese Produkte weisen jedoch deutliche sensorische Unterschiede zu Produkten auf Gelatinebasis auf (z.B. ein Kleben an den Zähnen oder ein zu kurzer Biss) und werden daher von vielen Verbrauchern abgelehnt.

In Bezug auf Gelatine ist es grundsätzlich bekannt, dass der Schmelzpunkt des Gels durch eine Vernetzung der Gelatine, d.h. eine chemische Verknüpfung der einzelnen Gelatinemoleküle, erhöht werden kann. Die Vernetzungsmittel, die hierfür typischerweise eingesetzt werden (z.B. chemische Vernetzungsmittel wie Formaldehyd und Glutaraldehyd oder Enzyme wie Transglutaminase) sind aber entweder für eine Verwendung im Lebensmittelbereich nicht zugelassen oder für die Herstellung von Zuckersüßwaren ungeeignet. Die Verwendung vieler chemischer Vernetzungsmittel scheidet bereits aufgrund ihrer Gesundheitsschädlichkeit aus.

In einem Artikel von T. Maier et al. werden Untersuchungen zur Prozess- und Lagerstabilität von Anthocyanen und anderen phenolischen Verbindungen in Pektin- und Gelatinegelen beschrieben, die mit Extrakten aus Traubentrester angereichert wurden (European Food Research and Technology (2009) 229:949-960).

Die US 5,932,273 offenbart eine Zuckersüßware, die eine Kombination aus Pektin und Gelatine als Geliermittel enthält. Die Zuckersüßware kann Kakiextrakt enthalten, der u.a. Tannine als polyphenolische Verbindung enthält.

Der Erfindung liegt daher die Aufgabe zugrunde, eine Zuckersüßware auf Basis eines Gelatinegels mit einem erhöhten Schmelzpunkt zur Verfügung zu stellen.

Diese Aufgabe wird erfindungsgemäß gelöst durch die Zuckersüßware gemäß Anspruch 1.

Polyphenole kommen in verschiedenen Pflanzen vor und werden zu den sekundären Pflanzenstoffen gezählt. Sie sind im Hinblick auf ihre chemische Struktur dadurch gekennzeichnet, dass sie eine oder mehrere aromatische Ringstrukturen enthalten, wobei zwei oder mehr Hydroxygruppen direkt an einen aromatischen Ring gebunden sind. Es wurde festgestellt, dass Polyphenole eine Vernetzung der Gelatine bewirken, so dass ein Polyphenol enthaltendes Gelatinegel einen höheren Schmelzpunkt aufweist als ein entsprechendes Gelatinegel ohne Polyphenole.

Dieser Effekt führt gleichzeitig dazu, dass die durch Gießen der Gelatinelösung hergestellten Zuckersüßwaren aufgrund des Zusatzes von Polyphenol beim Abkühlen schneller fest werden, d.h. der Herstellungsvorgang kann verkürzt werden, was einen wirtschaftlichen Vorteil bedeutet. Bei der Herstellung von aufgeschäumten Produkten wie z.B. Marshmallows wirkt sich ein schnelleres Gelieren generell vorteilhaft auf den Herstellungsprozess aus, da die gebildete Schaumstruktur dadurch besser stabilisiert werden kann.

Ein weiterer vorteilhafter Effekt, der sich durch die Vernetzung der Gelatine mit Polyphenolen ergibt, ist die Erhöhung der Festigkeit des gebildeten Gelatinegels, d.h. zur Erzielung einer vorgegebenen Festigkeit kann der Anteil an Gelatine reduziert werden, was wiederum zu einer Kostenreduzierung führt.

Das oder die Polyphenole können aus Pflanzenextrakten gewonnen sein und/oder die Zuckersüßware kann das oder die Polyphenole als Bestandteil eines oder mehrerer Pflanzenextrakte enthalten. Die Polyphenole können also gemäß einer Ausführungsform der Erfindung als definierte Verbindungen in isolierter Form eingesetzt werden, sofern sie entsprechend verfügbar sind. In der Regel ist es jedoch einfacher und kostengünstiger, Pflanzenextrakte einzusetzen, die ein oder mehrere Polyphenole ggf. neben weiteren Bestandteilen enthalten. Soweit die entsprechenden Pflanzen als Lebensmittel zugelassen sind, bestehen gegen die Verwendung der Extrakte oder daraus isolierter Polyphenole im Rahmen der vorliegenden Erfindung jedenfalls keine Bedenken.

Für die Auswirkung der Polyphenole auf den Schmelzpunkt des Gelatinegels ist insbesondere die eingesetzte Menge in Bezug auf die Menge an Gelatine von Bedeutung. Als vorteilhaft hat es sich erwiesen, wenn die Zuckersüßware mindestens 0,05 Gew.%, bevorzugt mindestens 0,1 Gew.%, weiter bevorzugt mindestens 0,5 Gew.% eines oder mehrerer Polyphenol enthaltender Pflanzenextrakte, bezogen auf die Menge an Gelatine, enthält, wobei mit einem Extrakt hier stets ein Trockenextrakt gemeint ist. Dabei hat sich gezeigt, dass eine Schmelzpunkterhöhung bereits mit relativ geringen Mengen an Polyphenol erzielt werden kann, während ab einer bestimmten Menge an Polyphenol ein weiterer Zusatz zu keiner nennenswerten Steigerung mehr führt. Als Obergrenze enthält die Zuckersüßware bis zu 10 Gew.%, bevorzugt bis zu 5 Gew.%, weiter bevorzugt bis zu 2,5 Gew.% eines oder mehrerer Polyphenol enthaltender Pflanzenextrakte, bezogen auf die Menge an Gelatine.

Der oder die Pflanzenextrakte sind bevorzugt ausgewählt aus Tee-Extrakt, Eichenrindenextrakt oder Kakaoextrakt. Entsprechende Extrakte, die einen hohen Anteil an Polyphenolen enthalten, sind kommerziell erhältlich und werden im Lebensmittelbereich bereits eingesetzt. Bevorzugte Pflanzenextrakte weisen einen Polyphenolgehalt von 60 Gew.% oder mehr auf, insbesondere auch von 90 Gew.% oder mehr.

Das oder die Polyphenole sind bevorzugt ausgewählt aus Tanninen, Catechinen, Anthocyanen und Quercetin, welche in den vorstehend genannten Pflanzenextrakten enthalten sind. Generell kann bei allen Polyphenolen von einer vernetzenden Wirkung auf Gelatine ausgegangen werden.

Der Zusatz eines oder mehrerer Polyphenole zu der erfindungsgemäßen Zuckersüßware führt wie beschrieben zu einer Erhöhung des Schmelzpunktes des Gelatinegels (sowie zu einer höheren Festigkeit), wobei der genaue Schmelzpunkt natürlich auch von der weiteren Zusammensetzung der Zuckersüßware abhängig ist. Typischerweise liegt der Schmelzpunkt des Gelatinegels bei der erfindungsgemäßen Zuckersüßware über 40 °C, bevorzugt über 45 °C, weiter bevorzugt über 50 °C. Zu beachten ist hierbei, dass in der Praxis bereits eine Schmelzpunkterhöhung um wenige Grad von erheblichem Vorteil sein kann.

Die Zuckersüßware umfasst erfindungsgemäß mindestens einen Zucker und/oder Zuckeraustauschstoff. Der mindestens eine Zucker ist bevorzugt ausgewählt aus Saccharose, Glucose, Fructose, Glucosesirup und Mischungen hiervon. Als Zuckeraustauschstoffe für kalorienreduzierte Zuckersüßwaren können insbesondere Zuckeralkohole wie z.B. Sorbit, Manit oder Maltit eingesetzt werden.

Zusätzlich zu Gelatine, Zucker, Zuckeraustauschstoffen und Polyphenolen kann die erfindungsgemäße Zuckersüßware weitere Bestandteile enthalten, die aus dem Stand der Technik bekannt sind, insbesondere Aromastoffe, Farbstoffe und/oder Genusssäuren.

Die Zuckersüßware ist vorzugsweise ausgewählt aus der Gruppe bestehend aus Gummibonbons, Marshmallows, Kaubonbons, Pastillen und Lakritze, wobei sich diese Produkte in ihrer genauen Zusammensetzung und/oder Form unterscheiden. Der Anteil an Gelatine liegt bei den Zuckersüßwaren gemäß der Erfindung bei ca. 1 bis ca. 15 Gew.%, bevorzugt bei ca. 1 bis ca. 7,5 Gew.%, insbesondere bei ca. 3,5 bis ca. 6,5 Gew.% (z.B. im Fall von Gummibonbons). Der Anteil an Zucker und/oder an Zuckeraustauschstoffen kann je nach gewünschtem Geschmack in einem weiten Bereich von ca. 20 bis ca. 85 Gew.% variieren.

Der Erfindung liegt ferner die Aufgabe zugrunde, ein Verfahren zur Herstellung der vorstehend beschriebenen Zuckersüßware vorzuschlagen.

Diese Aufgabe wird bei dem Verfahren der eingangs genannten Art erfindungsgemäß durch die folgenden Schritte gelöst:
- Herstellen einer ersten wässrigen Lösung, welche die Gelatine und optional den mindestens einen Zucker und/oder Zuckeraustauschstoff enthält;
- Herstellen einer zweiten wässrigen Lösung, welche das oder die Polyphenole und optional den mindestens einen Zucker und/oder Zuckeraustauschstoff enthält;
- Mischen der ersten und der zweiten wässrigen Lösung bei einer Temperatur von ca. 60 bis ca. 90 °C, um eine Gießlösung zu erhalten; und
- Gießen oder Extrudieren der Gießlösung in eine die Gestalt der Zuckersüßware definierende Hohlform.

Das erfindungsgemäße Verfahren sieht vor, die Gelatine und das oder die Polyphenole in Form von getrennten wässrigen Lösungen bereitzustellen und erst unmittelbar vor oder während des Gießens oder Extrudierens zu einer Gießlösung zu vereinigen. Dadurch kann verhindert werden, dass die Vernetzung der Gelatine durch die Polyphenole bereits in der Gießlösung vorzeitig einsetzt und dadurch die Verarbeitbarkeit beeinträchtigt wird.

Besonders vorteilhaft ist es, wenn das Mischen der ersten und der zweiten wässrigen Lösung mittels eines statischen Mischers erfolgt, durch den jeweils eine vorgegebene Menge der beiden Lösungen geleitet wird, so dass die gemischte Gießlösung vom statischen Mischer direkt in die Hohlform überführt werden kann (so genannte One-Shot-Technologie). Durch eine effektive Durchmischung können zu hohe lokale Konzentrationen an Polyphenol vermieden werden, die zu einer Ausfällung der Gelatine und damit zu einer unerwünschten Trübung der Zuckersüßwaren führen können.

Der mindestens eine Zucker und/oder Zuckeraustauschstoff ist vorzugsweise in der zweiten wässrigen Lösung enthalten, ebenso wie eventuelle weitere Bestandteile (z.B. Aroma und Farbstoffe), d.h. die zweite wässrige Lösung enthält in diesem Fall alle Bestandteile der Zuckersüßware mit Ausnahme der Gelatine.

Die erste und die zweite wässrige Lösung werden günstigerweise in einem Verhältnis von ca. 1:1 bis ca. 100:1 gemischt, d.h. die Gelatine enthaltende erste wässrige Lösung wird im Zuge des Mischungsvorgangs nur um maximal 50% verdünnt. Andernfalls müsste in der ersten wässrigen Lösung eine wesentlich höhere Gelatinekonzentration eingestellt werden als in der herzustellenden Süßware, was u.U. problematisch sein kann. Demgegenüber ist die Herstellung der zweiten wässrigen Lösung auch mit einer sehr hohen Ausgangskonzentration an Polyphenolen und ggf. Zuckern und/oder Zuckeraustauschstoffen in der Regel unproblematisch. Besonders günstig ist jedoch ein Mischungsverhältnis zwischen der ersten und der zweiten wässrigen Lösung von ca. 1:1 bis ca. 50:1, weiter bevorzugt von ca. 1:1 bis ca. 10:1, da eine relativ hohe Konzentration an Polyphenol in der zweiten wässrigen Lösung, wie sie bei sehr ungleichen Mischungsverhältnissen erforderlich ist, u.U. zu einer Ausfällung von Gelatine beim Mischen aufgrund zu hoher lokaler Polyphenolkonzentrationen führen kann.

Die erste wässrige Lösung enthält bevorzugt ca. 1 bis ca. 20 Gew.% Gelatine, weiter bevorzugt ca. 2 bis ca. 15 Gew.%.

Die zweite wässrige Lösung enthält bevorzugt ca. 0,5 bis ca. 25 Gew.% eines oder mehrere Polyphenol enthaltender Pflanzenextrakte. Alternativ kann die zweite wässrige Lösung auch eine entsprechende Menge eines oder mehrerer isolierter Polyphenole enthalten.

Bei einer Ausführungsform der Erfindung wird die Gießlösung vor und/oder während des Gießens aufgeschäumt. Auf diese Weise können Marshmallows oder andere geschäumte Zuckersüßwaren hergestellt werden.

Diese und weitere Vorteile der Erfindung werden anhand der nachfolgenden Beispiele näher erläutert.

### Beispiel 1

In diesem Beispiel wurde die Erhöhung des Schmelzpunktes eines Gelatinegels durch die Zugabe verschiedener Polyphenol enthaltender Pflanzenextrakte untersucht.

Bei den verwendeten Pflanzenextrakten handelt es sich um den Traubenextrakt OmniVin 20R, die Eichenrindenextrakte Tanal 02 und Tanal 04 und den Kakaoextrakt OmniCoa 55, die jeweils von der Firma Ajinomoto OmniChem in Belgien vertrieben werden, sowie um einen Grüntee-Extrakt und ein Tee-Extrakt von der Firma Plantextrakt (MB-Holding GmbH & Co. KG).

Eine erste wässrige Lösung, deren Zusammensetzung einem normalen Kochansatz für Gummibonbons entspricht, wurde aus folgenden Bestandteilen mit den jeweils angegebenen Gewichtsanteilen hergestellt:

**Komponenten A:**

| | |
|---|---|
| Saccharose | 28,20 Gew.% |
| Glukosesirup mit 44 DE (Dextroseäquivalente) | 37,60 Gew.% |
| Sorbitsirup (70 Gew.%ig) | 6,60 Gew.% |
| Wasser | 4,70 Gew.% |

**Komponenten B:**

| | |
|---|---|
| Gelatine vom Typ A (260 g Bloom) | 7,00 Gew.% |
| Wasser | 14,00 Gew.% |

**Komponente C:**

| | |
|---|---|
| Zitronensäure (50 Gew.%ige Lösung) | 1,90 Gew.% |

Die Komponenten A wurden gemischt, bis zu einer Trockensubstanz von 87 Gew.% eingekocht und anschließend auf 90 °C abgekühlt. Die Komponenten B wurden bei 60 °C gelöst. Die Komponenten B und C wurden nacheinander zu den Komponenten A hinzugegeben und eine homogene Mischung hergestellt.

Für eine Vergleichsprobe ohne Polyphenole wurde diese erste wässrige Lösung ohne weitere Zusätze als Gießlösung verwendet.

Für die Polyphenol enthaltenden Proben wurden aus den oben genannten Pflanzenextrakten jeweils zweite wässrige Lösungen hergestellt, indem zunächst 10 Gew.%ige Lösungen der Extrakte in Wasser hergestellt und diese dann im Verhältnis 1:1 mit einem Glukosesirup mit 60 DE gemischt wurden.

Somit enthält die erste wässrige Lösung 7 Gew.% Gelatine und die zweiten wässrigen Lösungen jeweils 5 Gew.% Polyphenol enthaltenden Pflanzenextrakt.

Zur Herstellung von Zuckersüßwaren (Gummibonbons) wurden die erste und die zweite wässrige Lösung in einem Verhältnis von 9:1 gemischt und diese Mischung dann in Hohlformen gegossen, die in einem Pulverbett aus trockener Stärke gebildet waren. Die Gießlösung wurde mit Stärke bestreut und ca. 48 h bei Raumtemperatur erstarren und trocknen gelassen. Das Gewicht der hergestellten Gummibonbons lag im Bereich von 2,5 bis 3 g.

Die Menge an Pflanzenextrakt beträgt in diesem Fall 7,9 Gew.%, bezogen auf die Menge an Gelatine.

Die ermittelten Schmelzpunkte der Gelatinegele der auf diese Weise hergestellten Zuckersüßwaren sind in der nachfolgenden Tabelle 1 angegeben:

**Tabelle 1**

| **Pflanzenextrakt** | **Schmelzpunkt** |
|---|---|
| Vergleichsprobe ohne Pflanzenextrakt | 45,9 °C |
| OmniVin 20R (Referenzbeispiel) | 51,3 °C |
| Tanal 02 | 48,1 °C |
| Tanal 04 | 46,3 °C |
| OmniCoa 55 | 48,7 °C |
| Grüntee-Extrakt | 48,3 °C |
| Tee-Extrakt | 48,6 °C |

Es zeigt sich, dass alle verwendeten Pflanzenextrakte zu einer Erhöhung des Schmelzpunktes führen, wobei die Erhöhung bei fast allen Extrakten (bis auf Tanal 04) mehr als 2 °C beträgt und im Fall von OmniVin 20R mit mehr als 5 °C sehr deutlich ist.

Die Farbe der Gießlösungen und der hergestellten Gummibonbons variiert je nach Pflanzenextrakt zwischen hellgelb über orange bis dunkelrot, wobei die Gießlösung nach dem Mischen der ersten und der zweiten wässrigen Lösung in allen Fällen sehr klar blieb und lediglich im Fall des Grüntee-Extrakts und des Tee-Extrakts eine leichte Trübung an der Oberfläche auftrat.

### Beispiel 2

In diesem Beispiel wurden die Eigenschaften eines Gummibonbons, das unter Verwendung des Pflanzenextraktes Tanal 04 hergestellt wurde, im Vergleich zu einem Gummibonbon ohne Polyphenole näher untersucht.

Die erste, Gelatine enthaltende wässrige Lösung (Kochansatz) und die zweite, den Pflanzenextrakt enthaltende wässrige Lösung wurden entsprechend dem Beispiel 1 hergestellt. Das Mischungsverhältnis zur Herstellung der Gießlösung beträgt in diesem Fall jedoch 39:1, d.h. es wurde eine wesentlich geringere Menge an Tanal 04 eingesetzt (1,83 Gew.% bezogen auf die Menge an Gelatine).

Die Schmelzpunkte der Vergleichsprobe und der Polyphenol enthaltenden Probe wurden unmittelbar nach der Herstellung der Gummibonbons bestimmt (wie im Beispiel 1) sowie nach einer sechswöchigen Lagerung der Gummibonbons. Die Ergebnisse sind in der nachfolgenden Tabelle 2 dargestellt:

**Tabelle 2**

| **Pflanzenextrakt** | **Schmelzpunkt nach Herstellung** | **Schmelzpunkt nach sechs Wochen** |
|---|---|---|
| Vergleichsprobe ohne Pflanzenextrakt | 44,9 °C | 44,9 °C |
| Tanal 04 | 45,9 °C | 51,4 °C |

Es zeigt sich, dass die relativ geringe Schmelzpunkterhöhung um 1 °C direkt nach der Herstellung der Gummibonbons (d.h. nach der 48stündigen Trocknung) im Verlauf von sechs Wochen auf eine sehr deutliche Erhöhung um 6,5 °C ansteigt. Dies deutet darauf hin, dass die Vernetzungsreaktion zwischen der Gelatine und den Polyphenolen während dieses Zeitraums weiter fortschreitet.

Des Weiteren wurden die Gelfestigkeiten der Gummibonbons gemäß der Bloom-Standardmethode gemessen, wobei die Ergebnisse in der nachfolgenden Tabelle 3 dargestellt sind (jeweils Mittelwerte aus zwei Messungen):

**Tabelle 3**

| **Pflanzenextrakt** | **Gelfestigkeit nach Herstellung** | **Gelfestigkeit nach sechs Wochen** |
|---|---|---|
| Vergleichsprobe ohne Pflanzenextrakt | 644 g | 741 g |
| Tanal 04 | 671 g | 935 g |

Die Gelfestigkeit erhöht sich im Verlauf der sechswöchigen Lagerung zwar auch bei der Vergleichsprobe (um ca. 15%), der Festigkeitsanstieg bei der Polyphenol enthaltenden Probe ist mit ca. 40% jedoch wesentlich signifikanter. Die zunehmende Vernetzung der Gelatine führt also neben der Erhöhung des Schmelzpunktes auch zu einer deutlichen Erhöhung der Gelfestigkeit.

### Beispiel 3

In diesem Beispiel wurde die Kinetik der Erhöhung des Schmelzpunktes bei einem Gummibonbon, das gemäß dem Beispiel 2 hergestellt wurde, während eines Zeitraumes von 28 Tagen nach der Herstellung untersucht (Pflanzenextrakt Tanal 04 gegenüber einer Vergleichsprobe ohne Polyphenole).

Die Ergebnisse sind in der nachfolgenden Tabelle 4 dargestellt:

**Tabelle 4**

| **Tage nach Herstellung** | **Schmelzpunkt Vergleichsprobe** | **Schmelzpunkt mit Tanal 04** |
|---|---|---|
| 0 | 44,9 °C | 45,0 °C |
| 2 | 44,8 °C | 45,1 °C |
| 4 | 44,8 °C | 47,1 °C |
| 9 | 45,2 °C | 49,3 °C |
| 11 | 44,8 °C | 49,4 °C |
| 12 | 45,0 °C | 49,6 °C |
| 14 | 45,2 °C | 50,4 °C |
| 17 | 47,0 °C | 49,9 °C |
| 21 | 44,9 °C | 49,7 °C |
| 24 | 44,8 °C | 50,1 °C |
| 28 | 44,8 °C | 50,4 °C |

Während der Schmelzpunkt bei der Vergleichsprobe im Wesentlichen konstant bleibt, ist bei der Polyphenol enthaltenden Probe zunächst ein kontinuierlicher Anstieg zu beobachten, wobei ab etwa 10 Tagen nach der Herstellung der Gummibonbons nur noch unwesentliche Änderungen zu beobachten sind. Langfristig ergibt sich auch hier eine Schmelzpunkterhöhung um etwa 5 °C aufgrund der Vernetzung des Gelatinegels durch Polyphenole.

### Beispiel 4

In diesem Beispiel wurden ebenfalls Gummibonbons mit dem Pflanzenextrakt Tanal 04 hergestellt, allerdings nach einem gegenüber den Beispielen 1 bis 3 abgewandelten Herstellungsverfahren, und deren Schmelzpunkt und Gelfestigkeit gegenüber einer Vergleichsprobe bestimmt.

Die erste wässrige Lösung enthält in diesem Fall ausschließlich die Gelatine, wobei diese in einer Konzentration von 7 Gew.% bei 60 °C in Wasser aufgelöst wurde. Die zweite wässrige Lösung enthält alle übrigen Bestandteile und wurde hergestellt durch das Mischen von 97,38 Gew.% eines Kochansatzes aus den Komponenten A und C gemäß dem Beispiel 1 sowie 2,62 Gew.% einer 25 Gew.%igen wässrigen Lösung des Pflanzenextrakts Tanal 04.

Die Gießlösung wurde hergestellt durch Mischen der ersten und der zweiten wässrigen Lösung im Verhältnis von 4:1, so dass ein Anteil von 2,34 Gew.% Pflanzenextrakt, bezogen auf die Menge an Gelatine, resultiert.

Das Gießen der Gummibonbons erfolgte wie in Beispiel 1 beschrieben.

Die Schmelzpunkte der Gummibonbons unmittelbar nach der Herstellung sowie nach einer sechswöchigen Lagerung sind in der nachfolgenden Tabelle 5 angegeben:

**Tabelle 5**

| **Pflanzenextrakt** | **Schmelzpunkt nach Herstellung** | **Schmelzpunkt nach sechs Wochen** |
|---|---|---|
| Vergleichsprobe ohne Pflanzenextrakt | 46,5 °C | 44,2 °C |
| Tanal 04 | 46,5 °C | 51,7 °C |

Auch hier zeigt sich eine signifikante Erhöhung des Schmelzpunktes von ca. 5 °C durch den Polyphenol enthaltenden Pflanzenextrakt, allerdings erst nach der Lagerzeit von sechs Wochen.

Die gemessenen Gelfestigkeiten (Mittelwerte aus jeweils zwei Messungen) ergeben sich aus der nachfolgenden Tabelle 6:

**Tabelle 6**

| **Pflanzenextrakt** | **Gelfestigkeit nach Herstellung** | **Gelfestigkeit nach sechs Wochen** |
|---|---|---|
| Vergleichsprobe ohne Pflanzenextrakt | 468 g | 617 g |
| Tanal 04 | 523 g | 791 g |

Auch wenn die Festigkeitswerte in diesem Fall generell niedriger sind als bei den Gummibonbons, die gemäß dem Verfahren von Beispiel 2 hergestellt wurden, zeigt sich auch hier, dass sich die Gelfestigkeit des mit Tanal 04 vernetzten Gelatinegels während der sechswöchigen Lagerung stärker erhöht als bei dem Gelatinegel gemäß der Vergleichsprobe.

### Beispiel 5

In diesem Beispiel wurde ermittelt, wie sich bei Anwesenheit von Polyphenolen eine Verringerung des Anteils an Gelatine in der Zuckersüßware auf den Schmelzpunkt und die Gelfestigkeit des Gelatinegels auswirkt.

Die Herstellung der Gummibonbons erfolgte wie in Beispiel 2 beschrieben, d.h. die erste, Gelatine enthaltende wässrige Lösung wurde im Verhältnis 39:1 mit der zweiten, den Pflanzenextrakt Tanal 04 enthaltenden wässrigen Lösung gemischt. Die Zusammensetzung der ersten wässrigen Lösung entsprach bei einer Probe exakt dem Beispiel 2 (relativer Gelatineanteil 100%), bei drei weiteren Proben wurde der Gelatineanteil im Verhältnis hierzu auf 85%, 75% bzw. 65% reduziert.

Die 14 Tage nach der Herstellung der Gummibonbons gemessenen Schmelzpunkte und Gelfestigkeiten sind in der nachfolgenden Tabelle 7 angegeben:

**Tabelle 7**

| **Pflanzenextrakt** | **Relativer Gelatineanteil** | **Schmelzpunkt nach 14 Tagen** | **Gelfestigkeit nach 14 Tagen** |
|---|---|---|---|
| Vergleichsprobe ohne Pflanzenextrakt | 100% | 44,6 °C | 884 g |
| Tanal 04 | 100% | 53,7 °C | 999 g |
| Tanal 04 | 85% | 52,3 °C | 545 g |
| Tanal 04 | 75% | 51,3 °C | 503 g |
| Tanal 04 | 65% | 51,8 °C | 187 g |

Aus diesen Werten ergibt sich, dass die durch die Polyphenole bedingte Schmelzpunkterhöhung des Gelatinegels nur eine geringe Abhängigkeit von der Gelatinekonzentration aufweist und selbst bei einem vernetzten Gelatinegel mit einem auf 65% reduzierten Gelatineanteil in Relation zur Vergleichsprobe noch eine deutliche Schmelzpunkterhöhung erreicht wird.

Demgegenüber ist die Gelfestigkeit erwartungsgemäß sehr stark von der Gelatinekonzentration abhängig, und bereits bei einer Reduzierung des relativen Gelatineanteils auf 85% der Vergleichsprobe kann der Festigkeitsverlust durch die Zugabe des Pflanzenextraktes nicht mehr kompensiert werden. Aus einer Interpolation der angegebenen Werte lässt sich abschätzen, dass ein mit Polyphenol vernetztes Gelatinegel mit einem um ca. 4% reduzierten Gelatineanteil (d.h. einem relativen Anteil von 96%) eine vergleichbare Gelfestigkeit hätte wie die Vergleichsprobe.

### Beispiel 6

In diesem Beispiel wurden die Auswirkungen unterschiedlicher Konzentrationen an Pflanzenextrakt auf die Schmelzpunkterhöhung des Gelatinegels untersucht.

Die Gummibonbons wurden gemäß dem Beispiel 2 hergestellt, wobei das Mischungsverhältnis zwischen der ersten und der zweiten wässrigen Lösung bei den verschiedenen Proben variiert wurde. Die Schmelzpunkte des Gelatinegels wurden nach einem Tag bzw. nach neun Tagen nach der Herstellung der Gummibonbons gemessen und sind in der nachfolgenden Tabelle 8 angegeben:

**Tabelle 8**

| **Pflanzenextrakt** | **Mischungsverhältnis** | **Pflanzenextrakt bezogen auf Gelatine** | **Schmelzpunkt nach 1 Tag** | **Schmelzpunkt nach 9 Tagen** |
|---|---|---|---|---|
| Vergleichsprobe ohne Pflanzenextrakt | - | 0 | 44,6 °C | 44,6 °C |
| Tanal 04 | 79:1 | 0,88 Gew.% | 48,2 °C | 51,8 °C |
| Tanal 04 | 39:1 | 1,83 Gew.% | 47,9 °C | 53,7 °C |
| Tanal 04 | 26:1 | 2,78 Gew.% | 52,2 °C | 52,3 °C |
| Tanal 04 | 19:1 | 3,76 Gew.% | 51,7 °C | 52,8 °C |

In der Tendenz zeigt sich hier, dass bei der Messung nach neun Tagen bereits mit einem Anteil von 1,83 Gew.% Pflanzenextrakt, bezogen auf die Menge an Gelatine, eine sehr deutliche Schmelzpunkterhöhung erreicht wird, die sich dann durch eine weitere Erhöhung des Anteils an Pflanzenextrakt auch nicht mehr steigern lässt. Ein Vergleich der Werte nach einem Tag zeigt jedoch, dass die erzielbare Schmelzpunkterhöhung durch eine höhere Konzentration an Pflanzenextrakt zum Teil schneller erreicht werden kann.

## Patentansprüche

1. Zuckersüßware auf Basis eines Gelatinegels, umfassend 1 bis 15 Gew.%, bevorzugt 1 bis 7,5 Gew.% Gelatine und 20 bis 85 Gew.% mindestens eines Zuckers und/oder Zuckeraustauschstoffs, **dadurch gekennzeichnet, dass** die Zuckersüßware ein oder mehrere Polyphenole enthält, wobei das oder die Polyphenole aus Tee-Extrakt, Eichenrindenextrakt oder Kakaoextrakt gewonnen sind und/oder die Zuckersüßware das oder die Polyphenole als Bestandteil eines oder mehrerer dieser Pflanzenextrakte enthält, und wobei die Zuckersüßware bis zu 10 Gew.% eines oder mehrerer dieser Pflanzenextrakte, bezogen auf die Menge an Gelatine, enthält.

2. Zuckersüßware nach Anspruch 1, wobei die Zuckersüßware mindestens 0,05 Gew.%, bevorzugt mindestens 0,1 Gew.%, weiter bevorzugt mindestens 0,5 Gew.% eines oder mehrerer Polyphenol enthaltender Pflanzenextrakte, bezogen auf die Menge an Gelatine, enthält.

3. Zuckersüßware nach Anspruch 1 oder 2, wobei die Zuckersüßware bis zu 5 Gew.%, bevorzugt bis zu 2,5 Gew.% eines oder mehrerer Polyphenol enthaltender Pflanzenextrakte, bezogen auf die Menge an Gelatine, enthält.

4. Zuckersüßware nach einem der vorangehenden Ansprüche, wobei das oder die Polyphenole ausgewählt sind aus Tanninen, Catechinen, Anthocyanen und Quercetin.

5. Zuckersüßware nach einem der vorangehenden Ansprüche, wobei das Gelatinegel einen Schmelzpunkt von über 40 °C aufweist, bevorzugt von über 45 °C, weiter bevorzugt von über 50 °C.

6. Zuckersüßware nach einem der vorangehenden Ansprüche, wobei der mindestens eine Zucker ausgewählt ist aus Saccharose, Glucose, Fructose, Glucosesirup und Mischungen hiervon.

7. Zuckersüßware nach einem der vorangehenden Ansprüche, wobei die Zuckersüßware ausgewählt ist aus der Gruppe bestehend aus Gummibonbons, Marshmallows, Kaubonbons, Pastillen und Lakritze.

8. Verfahren zur Herstellung einer Zuckersüßware nach einem der vorangehenden Ansprüche, umfassend die Schritte:
- Herstellen einer ersten wässrigen Lösung, welche die Gelatine und optional den mindestens einen Zucker und/oder Zuckeraustauschstoff enthält;
- Herstellen einer zweiten wässrigen Lösung, welche das oder die Polyphenole und optional den mindestens einen Zucker und/oder Zuckeraustauschstoff enthält;
- Mischen der ersten und der zweiten wässrigen Lösung bei einer Temperatur von 60 bis 90 °C, um eine Gießlösung zu erhalten; und
- Gießen oder Extrudieren der Gießlösung in eine die Gestalt der Zuckersüßware definierende Hohlform.

9. Verfahren nach Anspruch 8, wobei das Mischen der ersten und der zweiten wässrigen Lösung mittels eines statischen Mischers erfolgt.

10. Verfahren nach Anspruch 8 oder 9, wobei die zweite wässrige Lösung den mindestens einen Zucker und/oder Zuckeraustauschstoff enthält.

11. Verfahren nach einem der Ansprüche 8 bis 10, wobei die erste und die zweite wässrige Lösung in einem Verhältnis von 1:1 bis 100:1 gemischt werden, bevorzugt in einem Verhältnis von 1:1 bis 50:1, weiter bevorzugt in einem Verhältnis von 1:1 bis 10:1.

12. Verfahren nach einem der Ansprüche 8 bis 11, wobei die erste wässrige Lösung 1 bis 20 Gew.% Gelatine enthält, bevorzugt 2 bis 15 Gew.%.

13. Verfahren nach einem der Ansprüche 8 bis 12, wobei die zweite wässrige Lösung 0,5 bis 25 Gew.% eines oder mehrerer Polyphenol enthaltender Pflanzenextrakte enthält.

## Claims

1. Sugar confectionary product on the basis of a gelatin gel, comprising 1% to 15% by weight, preferably 1% to 7.5% by weight of gelatin and 20% to 85% by weight of at least one sugar and/or sugar substitute, **characterised in that** the sugar confectionary product contains one or more polyphenols, wherein the polyphenol or polyphenols are obtained from tea extract, oak bark extract or cocoa extract and/or the sugar confectionary product contains the polyphenol or polyphenols as a component of one or more of these plant extracts, and wherein the sugar confectionary product contains up to 10% by weight of one or more of these plant extracts, relative to the quantity of gelatin.

2. Sugar confectionary product according to claim 1, wherein the sugar confectionary product contains at least 0.05% by weight, preferably at least 0.1% by weight, and more preferably at least 0.5% by weight of one or more polyphenol-containing plant extracts, relative to the quantity of gelatin.

3. Sugar confectionary product according to claim 1 or 2, wherein the sugar confectionary product contains up to 5% by weight, preferably up to 2.5% by weight of one or more polyphenol-containing plant extracts, relative to the quantity of gelatin.

4. Sugar confectionary product according to one of the preceding claims, wherein the polyphenol or polyphenols are selected from tannins, catechins, anthocyanins and quercetin.

5. Sugar confectionary product according to one of the preceding claims, wherein the gelatin gel has a melting point of over 40°C, preferably over 45°C, and more preferably over 50°C.

6. Sugar confectionary product according to one of the preceding claims, wherein the at least one sugar is selected from sucrose, glucose, fructose, glucose syrup and mixtures thereof.

7. Sugar confectionary product according to one of the preceding claims, wherein the sugar confectionary product is selected from the group consisting of gum sweets, marshmallows, chewing sweets, pastilles and liquorice.

8. Method for producing a sugar confectionary product according to one of the preceding claims, comprising the steps:
- producing a first aqueous solution which contains the gelatin and optionally the at least one sugar and/or sugar substitute;
- producing a second aqueous solution which contains the polyphenol or polyphenols and optionally the at least one sugar and/or sugar substitute;
- mixing the first and the second aqueous solutions at a temperature between 60°C and 90°C, in order to obtain a moulding solution; and
- moulding or extruding the moulding solution into a hollow mould which defines the shape of the sugar confectionary product.

9. Method according to claim 8, wherein the mixing of the first and second aqueous solutions is performed by means of a static mixer.

10. Method according to claim 8 or 9, wherein the second aqueous solution contains the at least one sugar and/or sugar substitute.

11. Method according to one of the claims 8 to 10, wherein the first and second aqueous solutions are mixed in a ratio of 1:1 to 100:1, preferably in a ratio of 1:1 to 50:1, and more preferably in a ratio of 1:1 to 10:1.

12. Method according to one of the claims 8 to 11, wherein the first aqueous solution contains 1% to 20% by weight of gelatin, preferably 2% to 15% by weight.

13. Method according to one of the claims 8 to 12, wherein the second aqueous solution contains 0.5% to 25% by weight of one or more polyphenol-containing plant extracts.

## Revendications

1. Denrée sucrée à base de gel de gélatine, comprenant de 1 à 15 % en poids, de préférence de 1 à 7,5 % en poids de gélatine et de 20 à 85 % en poids d'au moins un sucre et/ou d'un substitut du sucre, **caractérisé en ce que** la denrée sucrée contient un ou plusieurs polyphénols, le ou les polyphénols étant obtenus à partir d'extrait de thé, d'extrait d'écorce de chêne ou d'extrait de cacao et/ou la denrée sucrée contenant le ou les polyphénols en tant qu'élément constitutif de l'un ou de plusieurs de ces extraits de plante, et la denrée sucrée contenant jusqu'à 10 % en poids d'un ou plusieurs de ces extraits de plante, par rapport à la quantité de gélatine.

2. Denrée sucrée selon la revendication 1, celle-ci contenant au moins 0,05 % en poids, de préférence au moins 0,1 % en poids, de manière plus préférée au moins 0,5 % en poids d'un ou plusieurs extraits de plante contenant du polyphénol, par rapport à la quantité de gélatine.

3. Denrée sucrée selon la revendication 1 ou 2, celle-ci contenant jusqu'à 5 % en poids, de préférence jusqu'à 2,5 % en poids d'un ou plusieurs extraits de plante contenant du polyphénol, par rapport à la quantité de gélatine.

4. Denrée sucrée selon l'une quelconque des revendications précédentes, dans laquelle le ou les polyphénols sont sélectionnés parmi les tanins, les catéchines, les anthocyanes et la quercétine.

5. Denrée sucrée selon l'une quelconque des revendications précédentes, dans laquelle le gel de gélatine présente un point de fusion supérieur à 40°C, de préférence supérieur à 45°C, de manière plus préférée supérieur à 50°C.

6. Denrée sucrée selon l'une quelconque des revendications précédentes, dans laquelle l'au moins un sucre est sélectionné parmi le saccharose, le glucose, le fructose, le sirop de glucose et des mélanges de ces substances.

7. Denrée sucrée selon l'une quelconque des revendications précédentes, celle-ci étant sélectionnée dans le groupe constitué de bonbons gommes, de pâtes de guimauve, de bonbons à mâcher, de pastilles et de réglisse.

8. Procédé de fabrication d'une denrée sucrée selon l'une quelconque des revendications précédentes comprenant les étapes suivantes :
- Préparation d'une première solution aqueuse qui contient la gélatine et, en option, l'au moins un sucre et/ou substitut de sucre ;
- Préparation d'une deuxième solution aqueuse qui contient le ou les polyphénols et, en option, l'au moins un sucre et/ou substitut de sucre ;
- Mélange de la première et de la deuxième solution aqueuse à une température de 60 à 90°C pour obtenir une solution à verser ; et
- Versage ou extrusion de la solution à verser dans un moule creux définissant la forme de la denrée sucrée.

9. Procédé selon la revendication 8, dans lequel le mélange de la première et de la deuxième solution aqueuse est effectué au moyen d'un premier mélangeur statique.

10. Procédé selon la revendication 8 ou 9, dans lequel la deuxième solution aqueuse contient l'au moins un sucre et/ou substitut de sucre.

11. Procédé selon l'une quelconque des revendications 8 à 10, dans lequel les première et deuxième solutions aqueuses sont mélangées dans un rapport de 1:1 à 100:1, de préférence dans un rapport de 1:1 à 50:1, de manière plus préférée dans un rapport de 1:1 à 10:1.

12. Procédé selon l'une quelconque des revendications 8 à 11, dans lequel la première solution aqueuse contient de 1 à 20 % en poids de gélatine, de préférence de 2 à 15 % en poids.

13. Procédé selon l'une quelconque des revendications 8 à 12, dans lequel la deuxième solution aqueuse contient de 0,5 à 25 % en poids d'un ou plusieurs extraits de plante contenant du polyphénol.
